# FASCICULE DE BREVET EUROPEEN

(11) **EP 3 992 669 B1**
(45) Date de publication et mention de la délivrance du brevet: **04.12.2024**
(21) Numéro de dépôt: 21203494.6
(22) Date de dépôt: 19.10.2021
(51) Int. Cl.: G01S 17/894, G01S 7/486, G01S 7/4863, G01S 17/36

(54) **PROCÉDÉ D'ACQUISITION D'UNE CARTOGRAPHIE DE PROFONDEURS PAR TEMPS DE VOL INDIRECT ET CAPTEUR CORRESPONDANT**
VERFAHREN ZUR ERFASSUNG EINER TIEFENKARTE MITHILFE DER INDIREKTEN FLUGZEIT UND ENTSPRECHENDER SENSOR
METHOD FOR ACQUIRING A DEPTH MAP BY INDIRECT FLIGHT TIME AND CORRESPONDING SENSOR

(30) Priorité: 30.10.2020 FR 2011151
(43) Date de publication de la demande: 04.05.2022
(73) Titulaire: STMICROELECTRONICS (GRENOBLE 2) SAS, 38000 Grenoble (FR)
(72) Inventeur: TUBERT, Cédric, 38120 SAINT EGREVE (FR)
(74) Mandataire: Casalonga

(56) Documents cités:
- WO-A1-2020/089057
- WO-A1-2020/089062
- KEEL MIN-SUN ET AL: "A VGA Indirect Time-of-Flight CMOS Image Sensor With 4-Tap 7- $\mu$ m Global-Shutter Pixel and Fixed-Pattern Phase Noise Self-Compensation", IEEE JOURNAL OF SOLID-STATE CIRCUITS, IEEE, USA, vol. 55, no. 4, 1 April 2020 (2020-04-01), pages 889 - 897, XP011780056, ISSN: 0018-9200, [retrieved on 20200325], DOI: 10.1109/JSSC.2019.2959502

## Description

Des modes de mise en oeuvre et de réalisation concernent les circuits intégrés, en particulier les capteurs intégrés d'acquisition de cartographie de profondeurs par temps de vol indirect, usuellement désigné par l'acronyme « iToF » des termes anglosaxons « indirect Time of Flight ».

Classiquement, les systèmes de mesure par temps de vol mesurent la durée entre l'instant d'émission d'un signal optique, c'est-à-dire un signal de lumière, et l'instant de réception de ce signal après réflexion sur des éléments présents dans le champ de détection, c'est-à-dire le champ de vision du système dans la zone illuminée. La distance séparant les éléments du champ de détection et le système est reconstruite à partir de la durée mesurée, proportionnellement à la célérité de la lumière.

Les systèmes de temps de vol indirect « iToF » émettent un signal optique modulé à une fréquence de modulation, et mesurent le déphasage de la modulation du signal reçu par rapport au signal émis. La mesure du déphasage peut être obtenue à partir de la quantité de charges photogénérées par des pixels d'un récepteur pendant des périodes d'intégration commandées par un signal de démodulation synchrone avec la modulation du signal optique.

Deux échantillonnages en opposition de phase (c'est-à-dire deux intégrations successives, respectivement commandées par le signal de démodulation en phase et par le signal de démodulation en opposition de phase) suffisent pour reconstruire le décalage de phase.

Cela étant, des techniques utilisant plus de deux échantillonnages, telles que par exemple la technique dite « échantillonnage 4-bin » utilisant quatre échantillonnages avec des composantes différentielles en quadrature de phase du signal de démodulation (c'est-à-dire des composantes différentielle à 0° et 180° et des composantes différentielles en quadrature de phase à 90° et 270°), sont plus communément mises en oeuvre car présentent des avantages notamment du fait des mécanismes connus et maîtrisés de démodulation de signaux en quadrature de phase (« I/Q » dans le domaine des communication radiofréquences).

La publication WO 2020/089062 A1 décrit un dispositif électronique ayant un réseau de pixels, et des circuits de pilotage de modulation de pixels, chaque circuit de pilotage de modulation de pixels étant configuré pour piloter un sous-réseau des pixels ; en particulier dans le cadre de la technique d'échantillonnage 4-bin.

La publication WO 2020/089057 A1 décrit un dispositif électronique ayant un réseau d'unités d'éclairage et de multiples circuits de commande, chaque circuit de commande étant conçu pour piloter un sous-réseau des unités d'éclairage.

Augmenter la fréquence de modulation améliore la précision de la distance mesurée, mais augmente également l'ambigüité de la mesure (c'est-à-dire la périodicité des distances différentes résultant au même déphasage) ce qui réduit la portée de la mesure. Cela étant, des techniques de mesures sur plusieurs fréquences de modulation permettent de limiter les problèmes liés à l'ambiguïté.

Il est souhaitable de proposer des systèmes d'acquisition de cartographie de profondeurs par temps de vol indirect ayant une haute résolution, par exemple de l'ordre du mégapixel, et à haute fréquence de modulation, par exemple supérieure à 100MHz (mégahertz) voire supérieure à 200MHz.

Or, augmenter la fréquence de modulation et la résolution des systèmes classiques produit des courants continus très élevés, par exemple proches de 2A (ampères) pour un capteur 1Megapixel modulé à 200MHz, pendant les phases d'intégration et également des pics de courants capacitifs proches de 25A sur une centaine de picosecondes.

Ces pics de courant génèrent d'une part de très fortes interférences électromagnétiques « EMI » (pour « ElectroMagnetic Interférences » en anglais), et causent d'autre part des chutes de la tension d'alimentation et des élévations de la tension de masse, pouvant notamment perturber les commutations d'éléments logiques et dégrader la synchronisation de la mesure de temps de vol.

En conséquence, il existe un besoin de proposer des solutions remédiant aux problèmes causés par les pics de courants mentionnés ci-dessus, dans des systèmes d'acquisition de cartographie de profondeurs par temps de vol indirect à haute résolution et à haute fréquence de modulation.

Selon des modes de mise en oeuvre et de réalisation, il est proposé d'allouer spatialement dans une matrice de pixels photosensibles des décalages de phase sur le signal de démodulation, afin d'étaler les interférences électromagnétiques. L'allocation spatiale des décalages de phase peut être définie sur un motif de pixels préétabli, pouvant être une ou plusieurs colonnes, une ou plusieurs lignes, ou un sous-réseau rectangulaire de pixels.

L'invention est définie par les revendications indépendantes du jeu de revendications annexé.

Des modes de mises en oeuvre et de réalisation de l'invention sont définis par les revendications dépendantes du jeu de revendications annexé.

Selon un aspect, il est proposé un procédé d'acquisition d'une cartographie de profondeurs par temps de vol indirect dans un réseau de pixels photosensibles segmenté en groupes de pixels, comprenant au moins une capture au cours de laquelle les pixels du réseau sont commandés par un signal de démodulation, le procédé comprenant une introduction de décalages de phase dans le signal de démodulation à des valeurs différentes et distribuées dans chaque groupe de pixels.

Par exemple, si l'acquisition comprend quatre captures au cours desquelles le signal de démodulation utilisé est fourni en opposition de phase ou en quadrature de phase, l'introduction des décalages de phase à des valeurs différentes et distribuées dans chaque groupe de pixels est effectuée sur les signaux de démodulation présentant les décalages de phase en opposition ou en quadrature respectifs à chaque capture.

Ainsi, du fait de la distribution des décalages de phases sur le signal de démodulation dans les groupes de pixels du réseau, les pixels du réseau ne sont pas tous commandés aux mêmes instants par un unique signal de démodulation lors d'une capture, mais les instants auxquels les pixels sont commandés sont répartis dans le temps.

Par conséquent, les pics de courants consommés dans le réseau sont d'intensités plus faibles et sont répartis dans le temps, et l'amplitude des interférences électromagnétiques qui en résultent est réduite proportionnellement au nombre de décalages de phase différents. En outre, la fréquence des interférences électromagnétiques est décalée proportionnellement au nombre de décalages de phase différents.

Selon un mode de mise en oeuvre, les valeurs des décalages de phase sont discrètement réparties sur une période du signal de démodulation.

Par exemple, on entend par « discrètement réparties » une répartition en une quantité volontairement limitée à un nombre très inférieur à la quantité maximale de décalages différents pouvant être introduits en théorie.

Selon un mode de mise en oeuvre, le réseau est arrangé en colonnes et en rangées de pixels, et le nombre de valeurs discrètes de décalages de phase est compris entre sensiblement un centième et sensiblement un dixième du nombre de colonnes ou de rangées. Par « sensiblement », on entend par exemple « arrondi à l'entier inférieur ou supérieur ».

En effet, prévoir un nombre discret de décalages de phase présente des avantages de mise en oeuvre, notamment avec des moyens plus simple et moins coûteux, mais également de façon plus facilement maîtrisable du point de vue de la calibration des décalages de phase introduits, c'est-à-dire la précision de la génération des décalages de phase.

En outre, les valeurs des décalages de phase peuvent être uniformément réparties sur une période du signal de démodulation, ou non. Néanmoins, une répartition uniforme des décalages de phase sur une période du signal de démodulation permet une minimisation optimale les interférences électromagnétiques.

Et, répartir les valeurs des décalages de phase relativement à une période du signal de démodulation permet de maîtriser la fréquence décalée des interférences électromagnétiques qui en résultent, et de faire un étalement spectral reproductible quelle que soit la fréquence de modulation, contrairement par exemple à des décalages de phase arbitraires qui conduiraient à un étalement spectral non maitrisé. Cela est d'autant plus avantageux dans le cadre d'une acquisition à plusieurs fréquences de modulation.

Selon un mode de mise en oeuvre, le nombre de valeurs différentes des décalages de phase est choisi de sorte que le produit de la fréquence du signal de démodulation avec ledit nombre est situé en dehors d'une bande passante d'intérêt.

En effet, les interférences électromagnétiques peuvent être particulièrement problématique pour certaines fréquences, par exemple dans une bande passante d'intérêt contenant les fréquences auxquelles fonctionnent des systèmes voisins au système mettant en oeuvre l'acquisition de la cartographie de profondeurs. Aussi, certains matériaux du système mettant en oeuvre l'acquisition de la cartographie de profondeurs peuvent, par nature, atténuer les fréquences au-delà d'une bande passante donnée, constituant la bande passante d'intérêt dans le contexte de ce mode de mise en oeuvre.

Selon un mode de mise en oeuvre, le réseau est arrangé en colonnes et en rangées de pixels et les groupes de pixels sont segmentés selon un motif périodique sur les colonnes et/ou sur les rangées.

Choisir un motif périodique dans le plan du réseau de pixel permet de répartir dans l'espace les consommations de courant, limitant l'apparition de phénomènes constructifs dans la génération des interférences électromagnétiques, et uniformisant les performances du système.

Selon un mode de mise en oeuvre, les groupes de pixels sont segmentés selon un motif périodique d'une ou plusieurs colonne(s) de sorte que chaque groupe comporte plusieurs colonnes spatialement non-consécutives ou plusieurs blocs spatialement non-consécutifs de colonnes spatialement consécutives.

Ce mode de mise en oeuvre est avantageux en matière de distribution des signaux dans le cas où l'architecture du réseau de pixels prévoit une distribution du signal de démodulation par colonnes de pixels.

Selon un mode de mise en oeuvre, le procédé comprend en outre un calcul d'un déphasage de temps de vol, pour chaque pixel, entre le signal de démodulation et un signal lumineux reçu lors de ladite au moins une capture, et le calcul du déphasage de temps de vol comprend une compensation du décalage de phase introduit sur le signal de démodulation pour chaque groupe de pixels.

Selon un mode de mise en oeuvre, ladite compensation comprend, pour chaque groupe de pixels, une addition modulo 360° de la valeur du décalage de phase introduit sur le signal de démodulation correspondant, au déphasage de temps de vol calculé.

En d'autres termes, la compensation est réalisée après calcul du déphasage vu pendant l'intégration du signal optique par les pixels, lors de la reconstruction de la distance, typiquement par des moyens numériques pouvant être facilement paramétrés à cet égard.

Selon un mode de mise en oeuvre, le calcul du déphasage de temps de vol comprend une opération trigonométrique effectuée sur des arguments résultant d'au moins deux captures au cours desquelles le réseau de pixels est commandé par un signal de démodulation respectif, et dans lequel ladite compensation comprend, pour chaque groupe de pixel, une rotation des arguments de l'opération trigonométrique d'un angle équivalent à la valeur du décalage de phase introduit sur le signal de démodulation correspondant.

En d'autres termes, la compensation est réalisée lors du calcul trigonométrique du déphasage vu pendant l'intégration du signal optique par les pixels, ce qui permet de fournir directement le déphasage de temps de vol tenant compte de la compensation, pour reconstruire la distance.

Selon un mode de mise en oeuvre, le procédé comprend en outre une émission d'un signal lumineux modulé par un signal de modulation, le signal de démodulation étant synchrone avec le signal de modulation.

Selon un autre aspect, il est proposé un circuit intégré adapté pour une cartographie de profondeurs par temps de vol indirect, comportant un réseau de pixels photosensibles segmenté en groupes de pixels, des moyens de commande configurés pour commander les pixels du réseau avec un signal de démodulation lors d'au moins une capture d'une acquisition de cartographie de profondeur, les moyens de commande étant configurés pour introduire des décalages de phase dans le signal de démodulation à des valeurs différentes et distribuées dans chaque groupe de pixels.

Selon un mode de réalisation, les moyens de commande sont configurés pour introduire des décalages de phase à des valeurs discrètement réparties sur une période du signal de démodulation.

Selon un mode de réalisation, le réseau est arrangé en colonnes et en rangées de pixels, et les moyens de commande sont configurés pour introduire un nombre de valeurs discrètes de décalages de phase compris entre sensiblement un centième et sensiblement un dixième du nombre de colonnes ou de rangées.

Selon un mode de réalisation, les moyens de commande sont configurés pour introduire un nombre de valeurs différentes des décalages de phase choisi de sorte que le produit de la fréquence du signal de démodulation avec ledit nombre est situé en dehors d'une bande passante d'intérêt.

Selon un mode de réalisation, le réseau est arrangé en colonnes et en rangées de pixels et les groupes de pixels sont segmentés selon un motif périodique sur les colonnes et/ou sur les rangées.

Selon un mode de réalisation, les groupes de pixels sont segmentés selon un motif périodique d'une ou plusieurs colonne(s) de sorte que chaque groupe comporte plusieurs colonnes spatialement non-consécutives ou plusieurs blocs spatialement non-consécutifs de colonnes spatialement consécutives.

Selon un mode de réalisation, le circuit intégré comporte en outre des moyens de calcul configurés pour calculer un déphasage de temps de vol, pour chaque pixel, entre le signal de démodulation et un signal lumineux reçu lors de ladite au moins une capture, et les moyens de calcul sont configurés pour compenser le décalage de phase introduit par les moyens de commande sur le signal de démodulation pour chaque groupe de pixel.

Selon un mode de réalisation, les moyens de calcul sont configurés pour compenser le décalage de phase introduit sur le signal de démodulation, pour chaque groupe de pixel, en additionnant modulo 360° la valeur du décalage de phase correspondant, au déphasage de temps de vol calculé.

Selon un mode de réalisation, les moyens de commande sont configurés pour commander les pixels du réseau avec des signaux de démodulation respectifs lors d'au moins deux captures d'une acquisition de cartographie de profondeur, les moyens de calcul sont configurés pour calculer le déphasage de temps de vol en effectuant une opération trigonométrique sur des arguments résultant desdites au moins deux captures, et les moyens de calcul sont configurés pour compenser le décalage de phase introduit sur les signaux de démodulation, pour chaque groupe de pixel, en pivotant d'un angle équivalent à la valeur du décalage de phase correspondant, les arguments de l'opération trigonométrique.

Selon un mode de réalisation, le circuit intégré comprend en outre un moyen d'émission configuré pour émettre un signal lumineux modulé par un signal de modulation, et les moyens de commande sont configurés pour générer le signal de modulation et le signal de démodulation synchrone avec le signal de modulation.

D'autres avantages et caractéristiques de l'invention apparaîtront à l'examen de la description détaillée de modes de réalisation et de mise en oeuvre, nullement limitatifs, et des dessins annexés, sur lesquels :
[Fig 1] ;
[Fig 2] ;
[Fig 3] ;
[Fig 4] ;

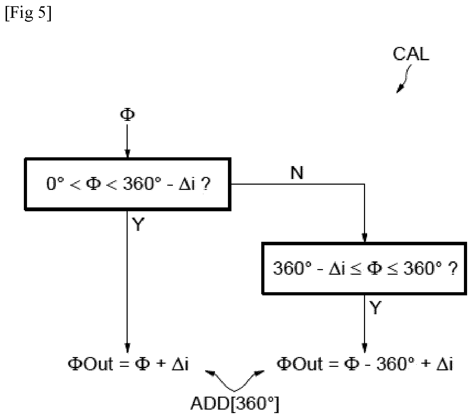

[Fig 5] illustrent des modes de réalisation et de mise en oeuvre de l'invention.

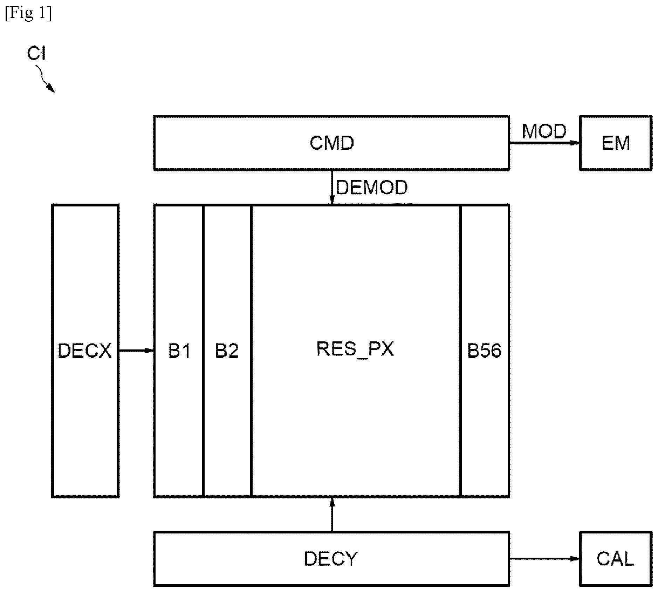

La figure 1 illustre un exemple de capteur intégré CI du type temps de vol indirect « iToF » (acronyme des termes anglais usuels « indirect Time of Flight »), destiné à mesurer une cartographie de profondeurs (usuellement « depth map » en anglais).

Le capteur intégré CI comporte un émetteur optique EM destiné à émettre un signal optique modulé à une fréquence de modulation. L'émetteur optique EM comprend par exemple une diode laser infrarouge, et est modulé par un signal de modulation MOD périodique, typiquement un signal en échelons, à une fréquence de modulation par exemple supérieure à 100 MHz.

Des moyens de commande CMD sont configurés pour commander des phases d'illumination par l'émetteur optique EM et notamment générer le signal de modulation MOD.

Les moyens de commande CMD sont également configurés pour commander une phase d'intégration, également appelée capture, d'un signal optique issu de la réflexion du signal optique modulé émis pendant l'illumination, par un réseau de pixels photosensibles RES_PX.

Chaque capture est effectuée simultanément à l'illumination, et les instants d'intégration des pixels sont commandés par un signal de démodulation DEMOD. Le signal de démodulation DEMOD est synchrone avec le signal de modulation MOD, et permet de mesurer le déphasage du signal optique reçu par rapport au signal optique émis afin d'en déduire la distance séparant l'objet de la réflexion et le capteur CI.

Le réseau de pixels photosensibles RES_PX comporte des pixels photosensibles à la longueur d'onde du signal optique émis, et peut avoir une densité de l'ordre de 1MP (MegaPixel), par exemple 0,5MP. La densité du réseau RES_PX est également nommée « définition ».

Le réseau de pixels RES_PX est arrangé en colonnes de pixels accessibles notamment via un décodeur de colonnes DECY, et en rangées de pixels accessibles via un décodeur de rangées DECX.

Les moyens de commande CMD sont configurés pour commander les pixels du réseau RES_PX avec un signal de démodulation DEMOD lors des captures, par exemple deux ou quatre captures, dans le cadre de l'acquisition d'une cartographie de profondeur.

En outre, des moyens de calcul CAL sont configurés pour calculer le déphasage Φ, également nommé déphasage de temps de vol, entre la modulation du signal optique émis et la modulation du signal optique reçu lors de ladite au moins une capture, à partir des quantités de charges photogénérées par les pixels du réseau RES_PX commandées par le signal de démodulation DEMOD.

Les quantités de charges photogénérées par les pixels peuvent être typiquement fournies aux moyens de calcul CAL par des signaux de tension issus d'un convertisseur analogique-numérique incorporé au décodeur de colonnes DECY.

Le décodeur de colonnes DECY peut aussi être prévu pour des traitements typiques tels que la soustraction des courants d'obscurité, en sus de sa fonction de décodage en coopération avec le décodeur de lignes DECX et suivant l'architecture du réseau de pixels RES_PX.

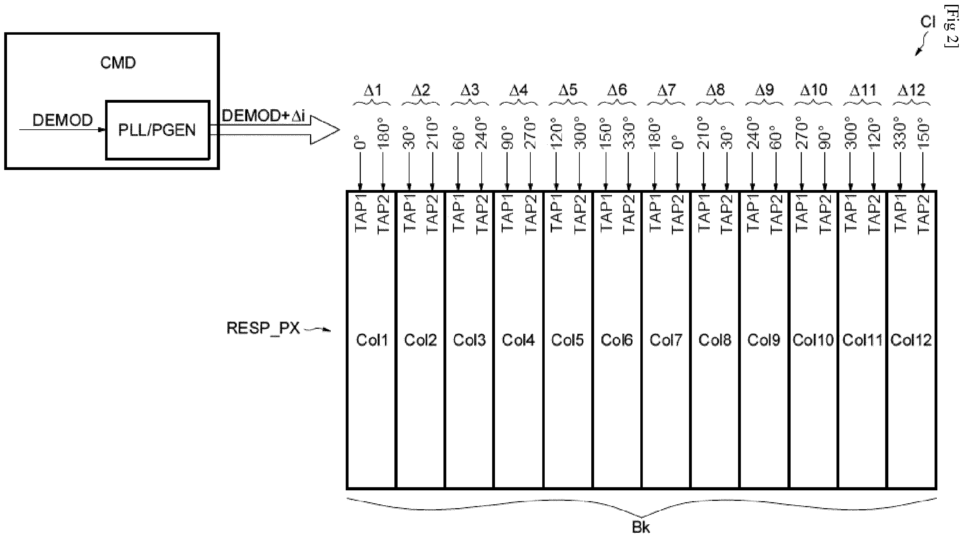

En outre, le réseau de pixels RES_PX est segmenté en blocs de pixels, par exemple cinquante-six blocs B1, B2, ..., B56, comportant chacun plusieurs colonnes, par exemple douze colonnes Col1-Col12 (figure 2).

La segmentation en blocs de pixels pourrait être faite sur les rangées du réseau RES_PX ou à la fois sur des rangées et des colonnes, c'est-à-dire sur des portions rectangulaires du réseau de pixels RES_PX.

On notera que la segmentation en blocs de pixels est prévue dans le cadre d'une distribution du signal de démodulation et peut être purement virtuelle, c'est-à-dire que le réseau de pixel RES_PX ne comporte pas nécessairement de structure propre à délimiter les blocs de la segmentation, contrairement par exemple aux colonnes et aux rangées qui correspondent notamment à des pistes électriquement conductrices contactant chaque pixel du réseau RES_PX.

Les moyens de commande CMD sont en effet configurés pour introduire des décalages de phase Δ1-Δ12 (figure 2) dans le signal de démodulation DEMOD à des valeurs différentes et distribuées dans des groupes de pixels respectifs.

D'un point de vue matériel, les moyens de commande CMD peuvent être réalisés par des circuits logiques et comporter une machine d'état, afin de mettre en oeuvre les fonctions de commande et de cadencement du capteur CI, et peuvent comporter en outre des moyens de génération de signaux configurés pour générer notamment les signaux de modulation MOD et de démodulation DEMOD, et introduire les décalages de phase Δ1-Δ12.

On se réfère à cet égard à la figure 2.

La figure 2 représente un bloc Bk quelconque parmi les blocs de pixels B1-B56 de l'exemple de la figure 1. Dans cet exemple, le bloc Bk comporte douze colonnes Col1-Col12 de pixels.

Dans cet exemple, chaque pixel photosensible est du type « 2-tap » c'est-à-dire capable de photogénérer des charges, à la fois et distinctement pendant deux demi-périodes consécutives du signal de démodulation DEMOD.

Le fonctionnement des pixel 2-tap est schématisé par deux entrée TAP1 et TAP2 recevant le signal de démodulation DEMOD en opposition de phase, par exemple 0° sur l'entrée TAP1 et 180° sur l'entrée TAP2 dans la première colonne Col1.

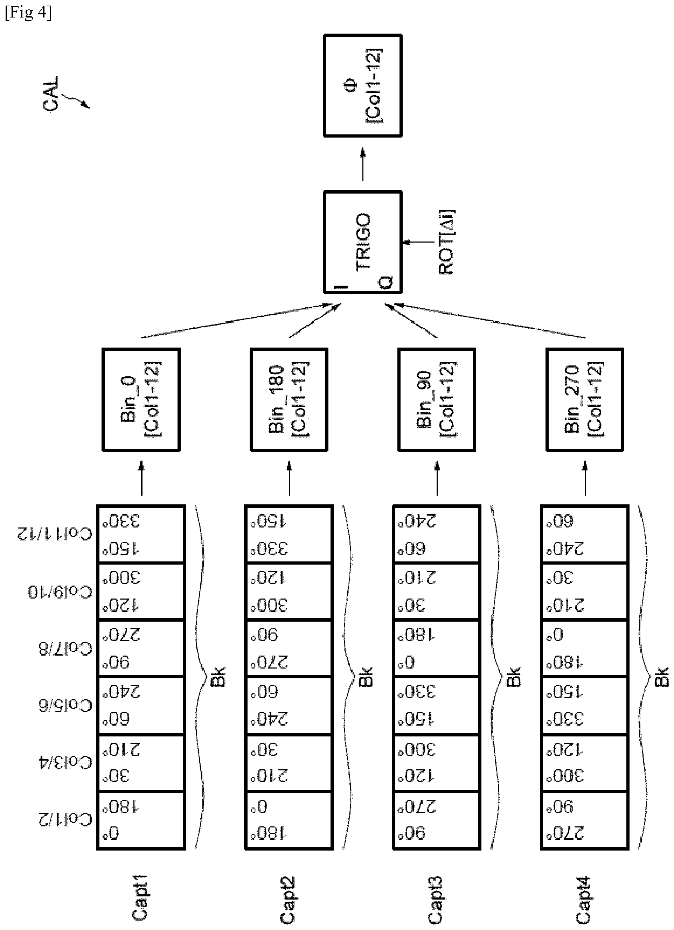

Cela étant, il faudra faire la distinction (notamment en relation avec la figure 4) entre la photogénération de charge du mécanisme 2-tap et une deuxième capture Capt2 (figure 4) commandée par le signal de démodulation DEMOD en opposition de phase. En effet, la photogénération de charges du mécanisme 2-tap peut correspondre à une information acquise de manière « différentielle » lors de la commande d'un seul signal de démodulation DEMOD, tandis que la deuxième capture Capt2 (figure 4) est commandée avec un signal de démodulation « de référence » DEMOD initialement prévu en opposition de phase avec le signal de modulation MOD.

Les moyens de commande CMD sont configurés pour générer le signal de démodulation DEMOD, qualifié « de référence », parfaitement synchrone avec le signal de modulation MOD commandant l'émission du signal optique. Par « synchrone », on entend par exemple que la phase du signal de démodulation de référence DEMOD est calée sur la phase du signal de modulation MOD (éventuellement en opposition de phase ou en quadrature de phase lors de captures successives d'une acquisition, voir ci-après en relation avec la figure 4).

Les moyens de commande sont configurés pour en outre introduire des décalages de phase Δ1-Δ12 dans le signal de démodulation de référence DEMOD, résultant à des signaux de démodulation décalés DEMOD+Δi, avec i=[1:12], par exemple au moyen d'une boucle à verrouillage de phase PLL ou d'un générateur de phase PGEN.

Chaque colonne Coli, i=[1:12], du bloc Bk reçoit un signal de démodulation décalé DEMOD+Δi respectif, c'est-à-dire avec des décalages de phase Δ1-Δ12 de valeurs différentes et distribuées dans chaque colonne de pixels Col1-Col12.

Dans cet exemple avantageux, les décalages de phase sont introduits dans le signal de démodulation de référence DEMOD à des valeurs discrètement et uniformément réparties sur une période du signal de démodulation, c'est-à-dire par exemple douze décalages de 0° à 330° avec un pas de 30°.

Cela correspond, sur l'entrée TAP2 en opposition de phase, à six décalages de 180° à 330° avec le pas de 30° et six décalages de 0° à 150° avec le pas de 30°.

D'autres quantités discrètes de valeurs de décalages de phase peuvent être prévues, par exemple soixante-quatre (64) décalages avec un pas de 5,625°.

D'un point de vue plus général, on pourra prévoir la quantité de valeurs discrètes de décalages de phase compris entre un centième du nombre total de colonnes du réseau RES_PX et un dixième du nombre total de colonnes du réseau RES_PX, par exemple arrondis à l'entier inférieur ou supérieur. Dans l'exemple représenté dans les figures 1 et 2, cela correspond à une quantité comprise entre 6 et 68 valeurs discrètes différentes.

Si les groupes de pixels dans lesquels sont distribuées les différentes valeurs des décalages de phase sont formées relativement aux rangées du réseau RES_PX, alors la quantité de valeurs discrètes de décalages pourra être définie de la même manière, relativement au nombre total de rangées du réseau RES_PX.

Il est en effet avantageux de prévoir une quantité « discrète » de décalages, afin de limiter la complexité de la génération des décalages de phase. Par exemple, on entend par « quantité discrète » une quantité volontairement limitée à un nombre très inférieur à la quantité maximale de décalages différents pouvant être introduits en théorie, c'est-à-dire par exemple le nombre total de colonnes du réseau de pixels RES_PX, voire dans l'absolu le nombre total de pixels du réseau RES_PX.

En effet, les moyens de commande CMD générant les décalages de phase peuvent ainsi être facilement réalisés, de manière compacte, et en outre être précisément calibrés sur les valeurs de décalages de phase souhaitées et selon le pas souhaité.

En fait, cette distribution des décalages de phase, par colonne au sein d'un bloc Bk, est appliquée dans tous les blocs B1-B56 du réseau de pixels RES_PX du capteur CI pendant la capture.

En d'autres termes, les pixels de chaque colonne individuelle Coli, i=[1:12], dans tous les blocs Bk, k=[1:56], sont commandés lors de la capture avec le même signal de démodulation décalé DEMOD+Δi.

Ainsi, les décalages de phase Δi sont introduits dans le signal de démodulation DEMOD à des valeurs différentes et distribuées dans des groupes de pixels respectifs, un groupe de pixel correspondant dans cet exemple plusieurs colonnes spatialement non-consécutives (une colonne Coli, dans chaque bloc Bk). En d'autres termes, les groupes de pixels sont segmentés selon un motif d'une colonne, avec une périodicité d'un bloc.

Cela étant, les groupes de pixels peuvent être segmentés selon un motif périodique de plusieurs colonnes, de sorte que chaque groupe comporte plusieurs ensembles spatialement non-consécutifs de colonnes spatialement consécutives, tel que dans l'exemple illustré par la figure 4.

Ainsi, lors d'une capture, de la distribution des décalages de phases sur le signal de démodulation dans les différents groupes de pixels du réseau, résulte à des commandes des différents groupes de pixels du réseau qui sont déclenchées à des instants répartis dans le temps.

En alternative, les groupes de pixels peuvent être segmentés selon un motif de présentant pas de périodicité spatiale, par exemple selon une répartition pseudo-aléatoire, « mélangée », dans le réseau de pixels RES_PX. La distribution des décalages de phases sur le signal de démodulation dans une telle répartition pseudo-aléatoire des différents groupes de pixels du réseau RES_PX résulte aux mêmes effets de répartition dans le temps des déclenchements de commandes.

En effet, le signal de démodulation DEMOD commande des commutations de transistors et des transferts de charges dans les pixels du réseau. Les courant circulant dans le réseau de pixels RES_PX résultant de ces mécanismes d'acquisition, notamment des courants capacitifs, et peuvent être très grands et générer des interférences électromagnétiques.

Or, la répartition dans le temps des instants de commutations permet de réduire les interférences électromagnétiques.

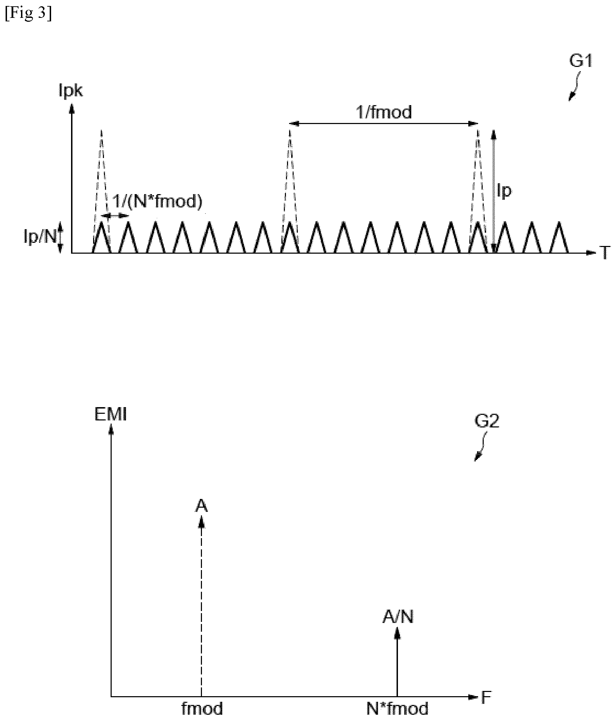

On se réfère à cet égard à la figure 3.

La figure 3 illustre schématiquement sur un premier graphique G1 la génération de pics de courant Ipk en fonction du temps T dans le réseau RES_PX lors d'une capture, et sur un deuxième graphique G2 l'amplitude EMI et la fréquence F des interférences électromagnétiques qui résultent des pics de courants.

Dans les deux graphiques G1, G2, les courbes en trait interrompu illustrent le cas classique dans lequel tous les pixels du réseau RES_PX sont commandés au même instant par le signal de démodulation de référence DEMOD.

Les courbes en trait continu illustrent l'effet de la répartition dans le temps des instants de commande, obtenue par l'introduction de décalages de phase dans le signal de démodulation DEMOD à des valeurs différentes Δ1-Δ12 et distribuées dans chaque groupe de pixels, telle que décrite précédemment en relation avec les figures 1 et 2.

Dans le cas classique, des pics de courant d'intensité élevée Ip, par exemple jusqu'à 25A (ampère), sont générés périodiquement à la période 1/fmod du signal de démodulation de référence DEMOD, avec fmod la fréquence du signal de démodulation de référence, par exemple supérieure à 100MHz.

En conséquence, les interférences électromagnétiques sont générées à la fréquence fmod selon une grande amplitude A.

Lorsque les pixels sont commandés par les signaux de démodulation décalés DEMOD+Δi, avec N décalages de phase différents et distribués dans N groupes de pixels du réseau RES_PX, il y a N fois moins de commutations au même instant, mais N fois plus d'instants différents de commutations de groupes de pixels.

Par conséquent, l'intensité des pics de courant Ip/N est sensiblement égale à l'intensité du cas classique Ip divisée par N, et la période de génération des pics de courants est elle aussi divisée par N, 1/(N*fmod) par rapport au cas classique.

En conséquence, les interférences électromagnétiques sont générées à une fréquence N*fmod décalée d'un facteur N, et selon une plus faible amplitude A/N.

Ainsi, les modes de réalisation et de mode de mise en oeuvre décrits en relation avec les figures 1 et 2 résultent à des pics de courants consommés dans le réseau d'intensités plus faibles et répartis discrètement dans le temps. L'amplitude des interférences électromagnétique générées par les pics de courants est réduite proportionnellement au nombre de décalages de phase différents, et la fréquence des interférences électromagnétiques est décalée proportionnellement au nombre de décalages de phase différents.

D'une part, le nombre N de valeurs différentes des décalages de phase Δi introduits dans le signal de démodulation DEMOD peut être choisi de façon à ce que l'amplitude A/N des interférences électromagnétiques soit suffisamment faible pour ne pas nuire au fonctionnement du capteur CI ou à son voisinage.

D'autre part, on pourra également choisir le nombre N de valeurs différentes des décalages de phase Δi introduits dans le signal de démodulation DEMOD de sorte que la fréquence des interférences électromagnétique N*fmod se situe en dehors d'une bande passante d'intérêt.

La bande passante d'intérêt peut par exemple correspondre à une bande de fréquences de fonctionnement du capteur CI, de sorte que les interférences électromagnétiques, ayant des fréquences en dehors de cet intervalle, ne perturbent pas le fonctionnement du capteur CI. Aussi, des éléments structurels du capteur CI, tels que des blindages du type cage de Faraday dans les boîtiers d'encapsulation, peuvent absorber et atténuer des ondes électromagnétiques située en dehors de la bande passante d'intérêt. Dans le second cas, les interférences électromagnétiques dont l'amplitude est déjà divisée par N peuvent ainsi être atténuée de manière supplémentaire.

On notera que les représentations des graphiques G1, et G2 correspondent à une introduction des valeurs des décalages de phase de façon uniformément répartie sur une période du signal de démodulation. Cela résulte notamment à un spectre en fréquence des interférences électromagnétiques positionné uniquement sur la fréquence égale au produit N*fmod mentionné ci-avant.

Cela étant, une répartition non-uniforme des décalages de phase sur une période du signal de démodulation causerait une répartition spectrale des interférences électromagnétiques plus étendue.

Dans ce cas, on pourra choisir conjointement la répartition non-uniforme des décalages de phase et le nombre N de sorte que le spectre en fréquence des interférences électromagnétiques, ou une majeure partie du spectre, soit situé en dehors de la bande passante d'intérêt.

Ainsi, les modes de réalisation et de mode de mise en oeuvre décrits en relation avec les figures 1 et 2 permettent de lever les contraintes relatives aux interférences électromagnétiques, ce qui rend possible des augmentations de la résolution du réseau de pixels et de la fréquence du signal de modulation, dans des systèmes d'acquisition de cartographie de profondeurs par temps de vol indirect.

On rappelle que la mesure de distance par temps de vol indirecte est basée sur un déphasage de temps de vol du signal optique reçu, évalué à partir du signal de démodulation, et on se réfère désormais aux figures 4 et 5 illustrant des modes de réalisation et de mise en oeuvre permettant de compenser le décalage de phase introduit sur le signal de démodulation pour chaque groupe de pixel dans l'évaluation du déphasage de temps de vol.

La figure 4 illustre d'une part un autre exemple de segmentation du réseau de pixels photosensibles en groupes de pixels, et d'autre part une méthode de compensation des décalages de phase Δi introduit sur le signal de démodulation DEMOD.

Dans cet exemple, le réseau de pixels RES_PX est premièrement segmenté en blocs de colonnes Bk tel que décrit précédemment en relation avec la figure 1, chaque bloc Bk comportant douze colonnes Col1-Col12.

Dans cet exemple, un groupe de pixel comporte deux colonnes consécutives Col1/2, Col3/4, ..., Col11/12, dans chaque bloc Bk.

Par conséquent, les groupes de pixels sont segmentés selon un motif périodique de deux colonnes, de sorte que chaque groupe comporte plusieurs ensembles spatialement non-consécutifs de deux colonnes spatialement consécutives.

D'autre part, la figure 4 illustre également une procédure d'acquisition de la cartographie de profondeurs, comprenant quatre captures Capt1, Capt2, Capt3, Capt4 successives, selon une technique d'échantillonnage 4-bin dont le principe est connu de l'homme du métier.

En résumé, la technique d'échantillonnage 4-bin utilise quatre captures, c'est-à-dire quatre intégrations avec des illuminations respectives, commandées avec des composantes du signal de démodulation en décalages de phase quadratiques.

En d'autres termes, dans chaque capture Capt1, Capt2, Capt3, Capt4, le signal de démodulation de référence est respectivement calé sur des phases de 0°, 180°, 90°, 270° du signal de modulation MOD utilisé pour l'émission du signal optique.

La quantité de charges photogénérés par chaque pixel lors d'une capture, usuellement appelée « bin », fournit une information correspondant à la superposition du déphasage du signal optique reçu avec la phase du signal de démodulation.

Par exemple, lors de la première capture Capt1 les pixels fournissent l'information par rapport au signal de démodulation en phase Bin_0 ; lors de la deuxième capture Capt2 les pixels fournissent l'information par rapport au signal de démodulation en opposition de phase Bin_180 ; lors de la troisième capture Capt3 les pixels fournissent l'information par rapport au signal de démodulation en quadrature de phase Bin_90 ; lors de la quatrième capture Capt4 les pixels fournissent l'information par rapport au signal de démodulation en opposition de quadrature de phase Bin_270.

En aparté, le fonctionnement « 2-tap » des pixels permet de recueillir chaque valeur de Bin deux fois dans les deux captures en oppositions de phase respectives (par exemple l'information Bin_0 est recueillie par le TAP1 de la première capture Capt1 et par le TAP2 de la deuxième capture Capt2). Cela est notamment avantageusement en matière de bruit ambient (usuellement « offset » en anglais) et de concordance de mesure (usuellement « matching » en anglais).

La reconstruction du déphasage Φ, également appelé « déphasage temps de vol », se fait par les moyens de calcul CAL et comprend, pour chaque pixel, une opération trigonométrique TRIGO du type « arctan(Q/I) » avec Q un argument représentatif du déphasage en quadrature obtenu par relation trigonométrique sur les quantités Bin_90 et Bin_270, et I un argument représentatif du déphasage en phase obtenu par relation trigonométrique sur les quantités Bin_0 et Bin_180.

Or, le décalage de phase Δi respectivement introduit sur le signal de modulation DEMOD+Δi de chaque groupe de pixels correspond à une rotation d'un angle connu dans les arguments Q et I.

Par conséquent, pour compenser le décalage de phase Δi introduit sur le signal de démodulation DEMOD+Δi, il est possible d'adapter le calcul trigonométrique, pour chaque groupe de pixel, en pivotant les arguments Q et I d'un angle équivalent à la valeur du décalage de phase Δi respectivement introduit.

La distance peut ensuite être directement calculée en connaissance du déphasage Φ compensé pour chaque groupe de pixels.

La figure 5 illustre une autre méthode de compensation des décalages de phase Δi introduits sur le signal de démodulation DEMOD.

Dans cette méthode, les moyens de calcul CAL sont configurés pour obtenir la valeur du déphasage Φ de chaque pixel par un calcul trigonométrique classique, c'est-à-dire indépendamment du groupe auquel le pixel appartient et sans tenir compte du décalage de phase Δi introduit sur le signal de démodulation DEMOD+Δi relatif à ce groupe.

Les moyens de calcul CAL sont configurés pour compenser chaque décalage de phase Δi introduit sur le signal de démodulation, sur la valeur du déphasage calculée Φ. Comme le calcul du déphasage Φ à été fait relativement à un signal décalé DEMOD+Δi, les moyens de calcul CAL ajoutent la valeur du décalage Δi correspondant à la valeur de déphasage Φ.

Si le déphasage calculé Φ est compris entre 0° et 360°-Δi, alors le déphasage réel Φout vaut Φ+Δi ; et si le déphasage calculé Φ est comprise entre 360°-Δi et 360°, alors le déphasage réel Φout vaut Φ-360°+Δi. Cela revient réaliser une addition modulo 360° de la valeur du décalage de phase Δi au déphasage de temps de vol calculé Φ.

Par ailleurs l'invention n'est pas limitée à ces modes de réalisation et de mise en oeuvre mais en embrasse toutes les variantes, par exemple, l'introduction de décalages de phase dans le signal de démodulation à des valeurs différentes et distribuées dans des groupes de pixel peut s'adapter à d'autres mécanismes que les mécanismes décrits, notamment la technique d'échantillonnage 4-bin de l'acquisition ou le mécanisme 2-tap des pixels, qui n'ont été donnés qu'à titre d'exemples avantageux et aucunement limitatifs.

## Revendications

1. Procédé d'acquisition d'une cartographie de profondeurs par temps de vol indirect dans un réseau de pixels photosensibles (RES_PX) segmenté en groupes de pixels, comprenant au moins une capture (Capt1-Capt4) au cours de laquelle les pixels du réseau sont commandés par un signal de démodulation (DEMOD),
**caractérisé en ce que** le procédé comprend une introduction de décalages de phase dans le signal de démodulation à des valeurs différentes (Δ1-Δ12) et distribuées dans chaque groupe de pixels (Col1-Col12, Bk),
et **en ce que** le procédé comprend en outre un calcul d'un déphasage de temps de vol (Φ), pour chaque pixel, entre le signal de démodulation (DEMOD) et un signal lumineux reçu lors de ladite au moins une capture (Capt1-Capt4), le calcul du déphasage de temps de vol (Φ) comprenant une compensation du décalage de phase (Δi) introduit sur le signal de démodulation pour chaque groupe de pixels.

2. Procédé selon la revendication 1, dans lequel les valeurs des décalages de phase (Δ1-Δ12) sont discrètement réparties sur une période du signal de démodulation (DEMOD).

3. Procédé selon la revendication 2, dans lequel le réseau (RES_PX) est arrangé en colonnes et en rangées de pixels, et le nombre de valeurs discrètes de décalages de phase (Δ1-Δ12) est compris entre sensiblement un centième et sensiblement un dixième du nombre de colonnes ou de rangées.

4. Procédé selon l'une des revendications précédentes, dans lequel le nombre (N) de valeurs différentes des décalages de phase (Δ1-Δ12) est choisi de sorte que le produit de la fréquence du signal de démodulation avec ledit nombre (N*fmod) est situé en dehors d'une bande passante d'intérêt.

5. Procédé selon l'une des revendications précédentes, dans lequel le réseau (RES_PX) est arrangé en colonnes et en rangées de pixels et les groupes de pixels sont segmentés selon un motif périodique sur les colonnes et/ou sur les rangées.

6. Procédé selon la revendication 5, dans lequel les groupes de pixels sont segmentés selon un motif périodique d'une ou plusieurs colonne(s) de sorte que chaque groupe comporte plusieurs colonnes spatialement non-consécutives ou plusieurs ensembles spatialement non-consécutifs de colonnes spatialement consécutives.

7. Procédé selon l'une des revendications 1 à 6, dans lequel ladite compensation comprend, pour chaque groupe de pixel, une addition modulo 360° (ADD[360°]) de la valeur du décalage de phase (Δi) introduit sur le signal de démodulation correspondant, au déphasage de temps de vol calculé (Φ).

8. Procédé selon l'une des revendication 1 à 6, dans lequel le calcul du déphasage de temps de vol (Φ) comprend une opération trigonométrique (TRIGO) effectuée sur des arguments (I, Q) résultant d'au moins deux captures (Capt1-Capt4) au cours desquelles le réseau de pixels (RES_PX) est commandé par un signal de démodulation respectif, et dans lequel ladite compensation comprend, pour chaque groupe de pixels, une rotation (ROT[Δi]) des arguments de l'opération trigonométrique d'un angle équivalent à la valeur du décalage de phase (Δi) introduit sur le signal de démodulation correspondant.

9. Procédé selon l'une des revendications précédentes, comprenant en outre une émission d'un signal lumineux modulé par un signal de modulation (MOD), le signal de démodulation (DEMOD) étant synchrone avec le signal de modulation (MOD).

10. Capteur du type temps de vol indirect (CI) adapté pour une cartographie de profondeurs, comportant un réseau de pixels photosensibles (RES_PX) segmenté en groupes de pixels, des moyens de commande (CMD) configurés pour commander les pixels du réseau avec un signal de démodulation (DEMOD) lors d'au moins une capture (Capt1-Capt4) d'une acquisition de cartographie de profondeur,
**caractérisé en ce que** les moyens de commande (CMD) sont configurés pour introduire des décalages de phase dans le signal de démodulation à des valeurs différentes (Δ1-Δ12) et distribuées dans chaque groupe de pixels,
et **en ce que** le capteur comporte en outre des moyens de calcul (CAL) configurés pour calculer un déphasage de temps de vol (Φ), pour chaque pixel, entre le signal de démodulation (DEMOD) et un signal lumineux reçu lors de ladite au moins une capture (Capt1-Capt4), les moyens de calcul (CAL) étant configurés pour compenser le décalage de phase (Δi) introduit par les moyens de commande (CMD) sur le signal de démodulation (DEMOD) pour chaque groupe de pixel.

11. Capteur selon la revendication 10, dans lequel les moyens de commande (CMD) sont configurés pour introduire des décalages de phase à des valeurs (Δ1-Δ12) discrètement réparties sur une période du signal de démodulation (DEMOD).

12. Capteur selon la revendication 11, dans lequel le réseau (RES_PX) est arrangé en colonnes et en rangées de pixels, et les moyens de commande (CMD) sont configurés pour introduire un nombre (N) de valeurs discrètes de décalages de phase (Δi) compris entre un centième et un dixième du nombre de colonnes ou de rangées.

13. Capteur selon l'une des revendications 10 à 12, dans lequel les moyens de commande (CMD) sont configurés pour introduire un nombre (N) de valeurs différentes des décalages de phase (Δi) choisi de sorte que le produit de la fréquence du signal de démodulation avec ledit nombre (N*fmod) est situé en dehors d'une bande passante d'intérêt.

14. Capteur selon l'une des revendications 10 à 13, dans lequel le réseau (RES_PX) est arrangé en colonnes et en rangées de pixels et les groupes de pixels sont segmentés selon un motif périodique sur les colonnes et/ou sur les rangées.

15. Capteur selon la revendication 14, dans lequel les groupes de pixels sont segmentés selon un motif périodique d'une ou plusieurs colonne(s) de sorte que chaque groupe comporte plusieurs colonnes spatialement non-consécutives ou plusieurs ensembles spatialement non-consécutifs de colonnes spatialement consécutives.

16. Capteur selon l'une des revendications 10 à 15, dans lequel les moyens de calcul (CAL) sont configurés pour compenser le décalage de phase (Δi) introduit sur le signal de démodulation (DEMOD), pour chaque groupe de pixel, en additionnant modulo 360° la valeur du décalage de phase correspondant (ADD[360°]), au déphasage de temps de vol calculé (Φ).

17. Capteur selon l'une des revendications 10 à 15, dans lequel les moyens de commande (CMD) sont configurés pour commander les pixels du réseau (RES_PX) avec des signaux de démodulation respectifs lors d'au moins deux captures (Capt1-Capt4) d'une acquisition de cartographie de profondeur, les moyens de calcul (CAL) sont configurés pour calculer le déphasage de temps de vol (Φ) en effectuant une opération trigonométrique (TRIGO) sur des arguments (I, Q) résultant desdites au moins deux captures, et dans lequel les moyens de calcul (CAL) sont configurés pour compenser le décalage de phase (Δi) introduit sur les signaux de démodulation (DEMOD), pour chaque groupe de pixel, en pivotant d'un angle équivalent à la valeur du décalage de phase correspondant (ROT[Δi]), les arguments de l'opération trigonométrique.

18. Capteur selon l'une des revendications 10 à 17, comprenant en outre un moyen d'émission (EM) configuré pour émettre un signal lumineux modulé par un signal de modulation (MOD), les moyens de commande (CMD) étant configuré pour générer le signal de modulation (MOD) et le signal de démodulation (DEMOD) synchrone avec le signal de modulation (MOD).

## Patentansprüche

1. Verfahren zur Erfassung einer Tiefenkartografie durch indirekte Flugzeit in einem in Pixelgruppen segmentierten Netz an lichtempfindlichen Pixeln (RES_PX), umfassend mindestens eine Datenerfassung (Capt1-Capt4), im Laufe derer die Pixel des Netzes durch ein Demodulationssignal (DEMOD) angesteuert werden,
**dadurch gekennzeichnet, dass** das Verfahren eine Einführung von Phasenverschiebungen in dem Demodulationssignal auf verschiedene (Δ1-Δ12) und in jeder Pixelgruppe (Col1-Col12, Bk) verteilte Werte umfasst,
und dadurch, dass das Verfahren weiter eine Berechnung einer Flugzeit-Phasenverschiebung (Φ) für jedes Pixel zwischen dem Demodulationssignal (DEMOD) und einem bei der mindestens einen Datenerfassung (Capt1-Capt4) empfangenen Lichtsignal umfasst, wobei die Berechnung einer Flugzeit-Phasenverschiebung ( Φ ) eine Kompensation der Phasenverschiebung (Δi) umfasst, die für jede Pixelgruppe in dem Demodulationssignal eingeführt wird.

2. Verfahren nach Anspruch 1, wobei die Werte der Phasenverschiebungen (Δ1-Δ12) diskret über eine Periode des Demodulationssignals (DEMOD) verteilt sind.

3. Verfahren nach Anspruch 2, wobei das Netz (RES_PX) in Spalten und in Reihen von Pixeln angeordnet ist, und die Anzahl an diskreten Phasenverschiebungswerten (Δ1-Δ12) zwischen im Wesentlichen einem Hundertstel und im Wesentlichen einem Zehntel der Anzahl an Spalten oder Reihen liegt.

4. Verfahren nach einem der vorstehenden Ansprüche, wobei die Anzahl (N) an verschiedenen Werten der Phasenverschiebungen (Δ1-Δ12) ausgewählt wird, sodass sich das Produkt der Frequenz des Demodulationssignals mit der Anzahl (N*fmod) außerhalb einer Bandbreite von Interesse befindet.

5. Verfahren nach einem der vorstehenden Ansprüche, wobei das Netz (RES_PX) in Spalten und Reihen von Pixeln angeordnet ist, und die Pixelgruppen entsprechend einem periodischen Motiv in den Spalten und/oder Reihen segmentiert sind.

6. Verfahren nach Anspruch 5, wobei die Pixelgruppen entsprechend einem periodischen Motiv einer oder mehrerer Spalte(n) segmentiert sind, sodass jede Gruppe mehrere räumlich nicht aufeinanderfolgende Spalten oder mehrere räumlich nicht aufeinanderfolgende Einheiten von räumlich aufeinanderfolgenden Spalten beinhaltet.

7. Verfahren nach einem der Ansprüche 1 bis 6, wobei die Kompensation für jede Pixelgruppe eine Addition modulo 360° (ADD[360°]) des Wertes der Phasenverschiebung (Δi), die in dem entsprechende Demodulationssignal eingeführt wird, zur berechneten Flugzeit-Phasenverschiebung (Φ), umfasst.

8. Verfahren nach einem der Ansprüche 1 bis 6, wobei die Berechnung der Flugzeit-Phasenverschiebung ( Φ ) eine trigonometrische Operation (TRIGO) umfasst, die auf Argumenten (I, Q), die sich aus mindestens zwei Datenerfassungen (Capt1-Capt4) ergeben, ausgeführt wird, im Laufe derer das Pixelnetz (RES_PX) durch ein jeweiliges Demodulationssignal angesteuert wird, und wobei die Kompensation für jede Pixelgruppe eine Rotation (ROT[Δi]) der Argumente der trigonometrischen Operation um einen zum Wert der Phasenverschiebung (Δi) äquivalenten Winkel umfasst, die in dem entsprechenden Demodulationssignal eingeführt wird.

9. Verfahren nach einem der vorstehenden Ansprüche weiter eine Sendung eines durch ein Modulationssignal (MOD) modulierten Lichtsignals umfassend, wobei das Demodulationssignal (DEMOD) mit dem Modulationssignal (MOD) synchron ist.

10. Sensor vom Typ für indirekte Flugzeit (CI), der für eine Tiefenkartografie angepasst ist, ein Netz an lichtempfindlichen Pixeln (RES_PX), das in Pixelgruppen segmentiert ist, Steuerungsmittel (CMD), die konfiguriert sind, um die Pixel des Netzes durch ein Demodulationssignal (DEMOD) bei mindestens einer Datenerfassung (Capt1-Capt4) einer Tiefenkartografie-Erfassung anzusteuern, beinhaltend,
**dadurch gekennzeichnet, dass** die Steuerungsmittel (CMD) konfiguriert sind, um Phasenverschiebungen in dem Demodulationssignal auf verschiedene (Δ1-Δ12) und in jeder Pixelgruppe verteilte Werte einzuführen,
und dadurch, dass der Sensor weiter Berechnungsmittel (CAL) beinhaltet, die konfiguriert sind, um eine Flugzeit-Phasenverschiebung ( Φ ) für jedes Pixel zwischen dem Demodulationssignal (DEMOD) und einem bei der mindestens einen Datenerfassung (Capt1-Capt4) empfangenen Lichtsignal zu berechnen, wobei die Berechnungsmittel (CAL) konfiguriert sind, um die Phasenverschiebung (Δi), die durch die Steuerungsmittel (CMD) in dem Demodulationssignal (DEMOD) für jede Pixelgruppe eingeführt wird, zu kompensieren.

11. Sensor nach Anspruch 10, wobei die Steuerungsmittel (CMD) konfiguriert sind, um Phasenverschiebungen in Werte (Δ1-Δ12) einzuführen, die diskret über eine Periode des Demodulationssignals (DEMOD) verteilt sind.

12. Sensor nach Anspruch 11, wobei das Netz (RES_PX) in Spalten und in Reihen von Pixeln angeordnet ist, und die Steuerungsmittel (CMD) konfiguriert sind, um eine Anzahl (N) an diskreten Werten von Phasenverschiebungen (Δi) einzuführen, die zwischen einem Hundertstel und im Wesentlichen einem Zehntel der Anzahl an Spalten oder Reihen liegen.

13. Sensor nach einem der Ansprüche 10 bis 12, wobei die Steuerungsmittel (CMD) konfiguriert sind, um eine Anzahl (N) an verschiedenen Werten der Phasenverschiebungen (Δi) einzuführen, die ausgewählt wird, sodass sich das Produkt der Frequenz des Demodulationssignals mit der Anzahl (N*fmod) außerhalb einer Bandbreite von Interesse befindet.

14. Sensor nach einem der Ansprüche 10 bis 13, wobei das Netz (RES_PX) in Spalten und Reihen von Pixeln angeordnet ist, und die Pixelgruppen entsprechend einem periodischen Motiv in den Spalten und/oder Reihen segmentiert sind.

15. Sensor nach Anspruch 14, wobei die Pixelgruppen entsprechend einem periodischen Motiv einer oder mehrerer Spalte(n) segmentiert sind, sodass jede Gruppe mehrere räumlich nicht aufeinanderfolgende Spalten oder mehrere räumlich nicht aufeinanderfolgende Einheiten von räumlich aufeinanderfolgenden Spalten beinhaltet.

16. Sensor nach einem der Ansprüche 10 bis 15, wobei die Berechnungsmittel (CAL) konfiguriert sind, um die Phasenverschiebung (Δi), die in dem Demodulationssignal (DEMOD) eingeführt wird, für jede Pixelgruppe durch Addieren modulo 360° des Werts der entsprechenden Phasenverschiebung (ADD[360°]) zur berechneten Flugzeit-Phasenverschiebung (Φ) zu kompensieren.

17. Sensor nach einem der Ansprüche 10 bis 15, wobei die Steuerungsmittel (CMD) konfiguriert sind, um die Pixel des Netzes (RES_PX) mit jeweiligen Demodulationssignalen bei mindestens zwei Datenerfassungen (Capt1-Capt4) einer Tiefenkartografie-Erfassung zu steuern, die Berechnungsmittel (CAL) konfiguriert sind, um die Flugzeit-Phasenverschiebung (Φ) durch Durchführen einer trigonometrischen Operation (TRIGO)auf Argumenten (I, Q) zu berechnen, die sich aus mindestens zwei Aufnahmen ergeben, und wobei die Berechnungsmittel (CAL) konfiguriert sind, um die Phasenverschiebung (Δi), die in den Demodulationssignalen (DEMOD) eingeführt wird, für jede Pixelgruppe durch Schwenken um einen zum Wert der entsprechenden Phasenverschiebung (ROT[Δi]) äquivalenten Winkel die Argumente der trigonometrischen Operation zu kompensieren.

18. Sensor nach einem der Ansprüche 10 bis 17, weiter ein Sendemittel (EM) umfassend, das konfiguriert ist, um ein durch ein Modulationssignal (MOD) moduliertes Lichtsignal zu senden, wobei die Steuerungsmittel (CMD) konfiguriert sind, um das Modulationssignal (MOD) und das Demodulationssignal (DEMOD), das mit dem Modulationssignal (MOD) synchron ist, zu erzeugen.

## Claims

1. A method for acquiring a depth map by indirect time-of-flight in a network of photosensitive pixels (RES_PX) segmented into groups of pixels, comprising at least one capture (Capt1-Capt4) during which the pixels of the network are controlled by a demodulation signal (DEMOD),
**characterised in that** the method comprises introducing phase shifts into the demodulation signal at different values (Δ1-Δ12) distributed in each group of pixels (Coll-Col12, Bk),
and **in that** the method further comprises calculating, for each pixel, a time-of-flight phase difference (φ) between the demodulation signal (DEMOD) and a light signal received during said at least one capture (Capt1-Capt4), the calculation of the time-of-flight phase difference (φ) comprising a compensation for the phase shift (Δi) introduced onto the demodulation signal for each group of pixels.

2. The method according to claim 1, wherein the values of the phase shifts (Δ1-Δ12) are discretely distributed over a period of the demodulation signal (DEMOD).

3. The method according to claim 2, wherein the network (RES_PX) is arranged into columns and into rows of pixels, and the number of discrete values of the phase shifts (Δ1-Δ12) is comprised between substantially one hundredth and substantially one tenth of a number of columns or of rows.

4. The method according to one of the preceding claims, wherein the number (N) of different values of the phase shifts (Δ1-Δ12) is selected so that the product of a frequency of the demodulation signal and said number (N*fmod) is outside a bandwidth of interest.

5. The method according to one of the preceding claims, wherein the network (RES_PX) is arranged into columns and into rows of pixels, and the groups of pixels are segmented according to a periodic pattern over the columns and/or over the rows.

6. The method according to claim 5, wherein the groups of pixels are segmented according to the periodic pattern of one or more column(s) so that each group includes several spatially non-consecutive columns or several spatially non-consecutive sets of spatially consecutive columns.

7. The method according to one of claims 1 to 6, wherein said compensation comprises, for each group of pixels, a modulo 360° addition (ADD[360°]) of the value of the phase shift (Δi) introduced onto the corresponding demodulation signal, to the calculated time-of-flight phase difference (φ).

8. The method according to one of claims 1 to 6, wherein the calculation of the time-of-flight phase difference (φ) comprises a trigonometric operation (TRIGO) performed on arguments (I, Q) resulting from at least two captures (Capt1-Capt4) during which the network of pixels (RES_PX) is controlled by a respective demodulation signal, and wherein said compensation comprises, for each group of pixels, a rotation (ROT[Δi]) of the arguments of the trigonometric operation by an angle equivalent to the value of the phase shift (Δi) introduced onto the corresponding demodulation signal.

9. The method according to one of the preceding claims, further comprising emitting a light signal modulated by a modulation signal (MOD), the demodulation signal (DEMOD) being synchronous with the modulation signal (MOD).

10. An indirect time-of-flight type sensor (CI) adapted for depth mapping, including a network of photosensitive pixels (RES_PX) segmented into groups of pixels, control means (CMD) configured to control the pixels of the network with a demodulation signal (DEMOD) during at least one capture (Capt1-Capt4) of an acquisition of a depth map,
**characterised in that** the control means (CMD) are configured to introduce phase shifts into the demodulation signal at different values (Δ1-Δ12) distributed in each group of pixels,
and **in that** the sensor further includes calculation means (CAL) configured to calculate a time-of-flight phase difference (φ), for each pixel, between the demodulation signal (DEMOD) and a light signal received during said at least one capture (Capt1-Capt4), the calculation means (CAL) being configured to compensate for the phase shift (Δi) introduced by the control means (CMD) onto the demodulation signal (DEMOD) for each pixel group.

11. The sensor according to claim 10, wherein the control means (CMD) is configured to introduce phase shifts at values (Δ1-Δ12) discretely distributed over a period of the demodulation signal (DEMOD).

12. The sensor according to claim 11, wherein the network (RES_PX) is arranged into columns and into rows of pixels, and the control means (CMD) are configured to introduce a number (N) of discrete values of phase shifts (Δi) comprised between one hundredth and one tenth of the number of columns or of rows.

13. The sensor according to one of claims 10 to 12, wherein the control means (CMD) are configured to introduce a number (N) of different values of the phase shifts (Δi) selected so that a product of the frequency of the demodulation signal and said number (N*fmod) is outside a bandwidth of interest.

14. The sensor according to one of claims 10 to 13, wherein the network (RES_PX) is arranged into columns and into rows of pixels, and the groups of pixels are segmented according to a periodic pattern over the columns and/or over the rows.

15. The sensor according to claim 14, wherein the groups of pixels are segmented according to a periodic pattern of one or more column(s) so that each group includes several spatially non-consecutive columns or several spatially non-consecutive sets of spatially consecutive columns.

16. The sensor according to one of claims 10 to 15, wherein the calculation means (CAL) are configured to compensate for the phase shift (Δi) introduced onto the demodulation signal (DEMOD), for each group of pixels, by modulo 360° addition of the value of the corresponding phase shift (ADD[360°]), to the calculated time-of-flight phase difference.

17. The sensor according to one of claims 10 to 15, wherein the control means (CMD) are configured to control the pixels of the network (RES_PX) with respective demodulation signals during at least two captures (Capt1-Capt4) of a depth map acquisition, the calculation means (CAL) are configured to calculate the time-of-flight phase difference (φ) by performing a trigonometric operation (TRIGO) on arguments (I, Q) resulting from said at least two captures, and wherein the calculation means (CAL) are configured to compensate for the phase shift (Δi) introduced onto the demodulation signals (DEMOD), for each group of pixels, by pivoting by an angle equivalent to the value of the corresponding phase shift (ROT[Δi]), the arguments of the trigonometric operation.

18. The sensor according to one of claims 10 to 17, further comprising an emission means (EM) configured to emit a light signal modulated by a modulation signal (MOD), the control means (CMD) being configured to generate the modulation signal (MOD), the demodulation signal (DEMOD) synchronous with the modulation signal (MOD).
